# EUROPÄISCHE PATENTSCHRIFT

(11) **EP 0 544 023 B1**
(45) Veröffentlichungstag und Bekanntmachung des Hinweises auf die Patenterteilung: **01.02.1995**
(21) Anmeldenummer: 91120019.4
(22) Anmeldetag: 25.11.1991
(51) Int. Cl.: H02K 9/06, H02K 9/10

(54) **Gasgekühlte elektrische Maschine**
Gas cooled electrical machine
Machine électrique refroidie par gaz

(43) Veröffentlichungstag der Anmeldung: 02.06.1993
(73) Patentinhaber: ASEA BROWN BOVERI AG, 5400 Baden (CH)
(72) Erfinder: Zimmermann, Hans, CH-8617 Mönchaltorf (CH); Pongracz, Sandor, CH-8302 Kloten (CH)

(56) Entgegenhaltungen:
- EP-A- 0 118 802
- DE-C- 1 099 064
- DE-C- 1 613 102
- GB-A- 2 022 933

## Beschreibung

### TECHNISCHES GEBIET

Die Erfindung bezieht sich auf eine gasgekühlte elektrische Maschine; dabei wird Frischgas von unten angesaugt, gelangt in einen Ansaugraum und wird mit einen Axialventilator in den Wickelkopfraum des Stators befördert, wo er sich in mehrere Teilströme zur Kühlung des Stators und Rotors aufteilt.

### TECHNOLOGISCHER HINTERGRUND UND STAND DER TECHNIK

Bei gasgekühlten Turbogeneratoren wird die Kühlung durch Axialventilatoren gewährleistet, welche normalerweise beidseits des Rotors auf dessen Welle befestigt sind und die erforderliche Kühlgasmenge und eine gewisse Druckhöhe liefern (vgl. Firmenschrift "Turbogeneratoren für 18...230 MVA mit Luftkühlung WX und WY", Druckschrift Nr.CH-KW 160887, insbesondere Längsschnitt auf Seite 9 oder Europäische Patentanmeldung EP-A-0 118 802).

Bei den bekannten Luftführungen vor und hinter dem Axialventilator erzeugt die vorgegebene Drehrichtung des Rotors einen Einlaufdrall in Drehrichtung. Die Anströmung zum Axialventilator erfolgt in der Regel nur von einer Seite, z.B. von unten von den unter der Maschine angeordneten Kühlern, und nicht - wie es wünschenswert wäre - von allen Seiten her. Diese beiden Tatsachen haben zur Folge, dass im Wickelkopfraum am Umfang unterschiedliche Luftgeschwindigkeiten herrschen, wodurch die Kühlwirkung ungleichmässig ist. Dies wiederum bedeutet eine schlechte Ausnutzung der Maschine.

### KURZE DARSTELLUNG DER ERFINDUNG

Der Erfindung liegt die Aufgabe zugrunde, bei einer gasgekühlten elektrischen Maschine der eingangs genannten Art die Kühlung zu verbessern und damit die Ausnützung der Maschine zu erhöhen.

Diese Aufgabe wird erfindungsgemäss durch die im Patentanspruch 1 gekennzeichneten Merkmale gelöst.

Der Vorteil der Erfindung ist insbesondere darin zu sehen, dass durch diese relativ einfachen baulichen Massnahmen, die sowohl bei der Konzeption der Maschine als auch erst nachträglich verwirklicht werden können, der Wirkungsgrad erhöht, die Luftgeschwindigkeiten im Wickelkopfraum vergleichmässigt und dabei gleichzeitig die Maximal-Temperaturen der Wicklung um ca. 15 - 20°C erniedrigt werden.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen vereinfachten Längsschnitt durch die Endpartie eines luftgekühlten Turbogenerators;
- Fig.2: eine Draufsicht auf das dem Axialventilator vorgeschaltete Luftführungsorgan vor dessen Einbau in die Maschine.

### WEGE ZUR AUSFÜHRUNG DER ERFINDUNG

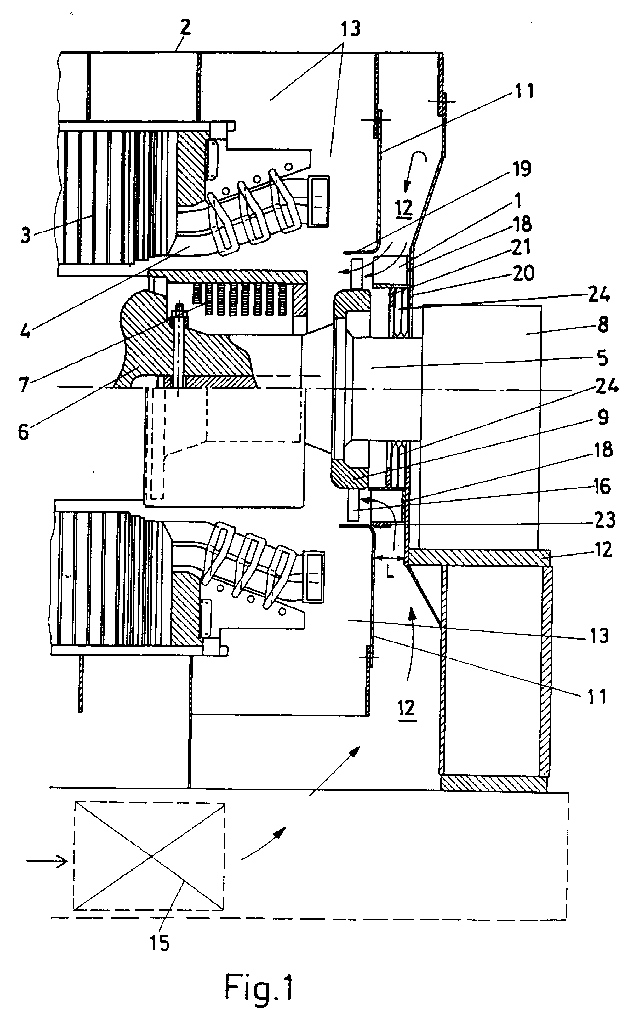

Mit Ausnahme des gesamthaft mit der Bezugsziffer 1 bezeichneten Luftführungsorgans entspricht der in Fig.1 dargestellte luftgekühlte Turbogenerator der Maschine, wie sie auf Seite 9 der eingangs genannten Firmenschrift beschrieben und dargestellt ist. In einem Gehäuse 2 ist der Statorblechkörper 3 mit Statorwicklung 4 angeordnet. Die Rotorwelle 5 des Rotors 6 mit Rotorwicklung 7 ist in Lagerböcken 8 gelagert. Auf der Welle 5 ist ein Axialventilator 9 mit Schaufeln 10 befestigt. Eine mehrteilige Wickelkopfverschalung 11 trennt den Ansaugraum 12 des Axialventilators 11 vom Wickelkopfraum 13. Der Ansaugraum 12 ist nach aussen mittels einer Aussenverschalung 14 abgeschlossen.

Die vom Axialventilator 9 geförderte Kühlluft strömt in Pfeilrichtung in den Wickelkopfraum 13, verteilt sich dort in verschiedene Teilströme zur Kühlung von Rotor und Stator. Im mittleren Abschnitt des Maschine tritt die nunmehr erwärmte Luft in die unter der Maschine angeordneten Kühler 15 ein, wird dort abgekühlt und gelangt hinter den Kühlern 15 zurück zum Ansaugraum 12.

Wie aus Fig.1 erhellt, erfolgt die Anströmung zum Axialventilator 9 im wesentlichen nur von einer Seite, nämlich von unten, her. Ohne das erfindungsgemässe Luftführungsorgan 1 stellen sich die eingangs geschilderten Wirkungen hinsichtlich ungleichmässiger Kühlung des Wickelkopfes des Statorwicklung 4 ein.

Erfindungsgemäss ist nun koaxial zum Axialventilator 9 ein ringförmiges Luftführungsorgan 1 vorgesehen, das an der Aussenverschalung 14 befestigt ist. Es umfasst einen Innenring 16 auf dem radial nach aussen gerichtete Leitbleche 17 befestigt sind, welche die Funktion von Leitschaufeln für den Axialventilator übernehmen. Diese Leitbleche 17 sind annähernd gleichmässig über den Umfang des Innenrings 16 verteilt. Ein Deckring 18 auf der dem Axialventialtor 9 abgewandte Seite erhöht die Stabilität des Luftführungsorgans. Die radiale Höhe der Leitbleche 17 entspricht in etwa der Länge der Schaufeln 10 des Axialventialtors 9. In axialer Richtung erstrecken sie sich praktisch über die axiale Länge L des Ansaugraums 12 am radial inneren Ende 19 der Wickelkopfverschalung 11. Zur Befestigung am radial inneren Ende 20 der Aussenverschalung 14 ist an der Innenseite des Innenrings 16 ein Ringflansch 21 befestigt mit Befestigungsbohrungen 22 zum Anschrauben an die Aussenverschalung 14. Zusammen mit dem Luftführungsorgan 1 ist eine Wellendichtung 24 an der Aussenverschalung 14 festgeschraubt.

Um den Zuströmungsquerschnitt vom Ansaugraum 12 zum Axialventilator 9 von den unter der Maschine angeordneten Kühlern 15 lokal zu verringern, ist im unteren Bereich des Luftführungsorgans 1, also dem Bereich, der den Kühlern 15 am nächsten liegt, eine teilweise Abdeckung 23 der Leitbleche 17 vorgesehen. Diese erstreckt sich in Umfangsrichtung über etwa ein Viertel des Umfangs des Luftführungsorgans 1 symmetrisch zur vertikalen Symmetriebene 25 der Maschine. Ihre axiale Erstreckung beträgt annähernd die Hälfte des axialen Länge der Leitbleche 17 und damit etwa die Hälfte der Einströmlänge L. Die Abdeckung beginnt dabei an der dem Axialventilator 9 zugewandten Hinterkante der Leitbleche 17.

Durch Vorschalten eines derart ausgebildeten Luftführungsorgans in den Strömungsweg der Kühlluft unmittelbar vor dem Axialventialtor 9 wird erreicht, dass die Zuströmung zum Axialventilator 9 vergleichmässigt wird, d.h. der Kühlluftdurchsatz ist über den gesamten Umfang seiner Beschaufelung 17 annähernd konstant. Damit wird auch die Kühlwirkung im Wickelkopf vergleichmässigt, so dass die in den Wickelkopfleitern auftretenden Maximal-Temperaturen um ca. 15°C erniedrigt werden, die Maschine demgemäss höher ausgenutzt werden kann. Die radial/axial stehenden Leitbleche 16 reduzieren den Einlaufdrall, was sich positiv auf den Wirkungsgrad des Axialventilators 9 auswirkt.

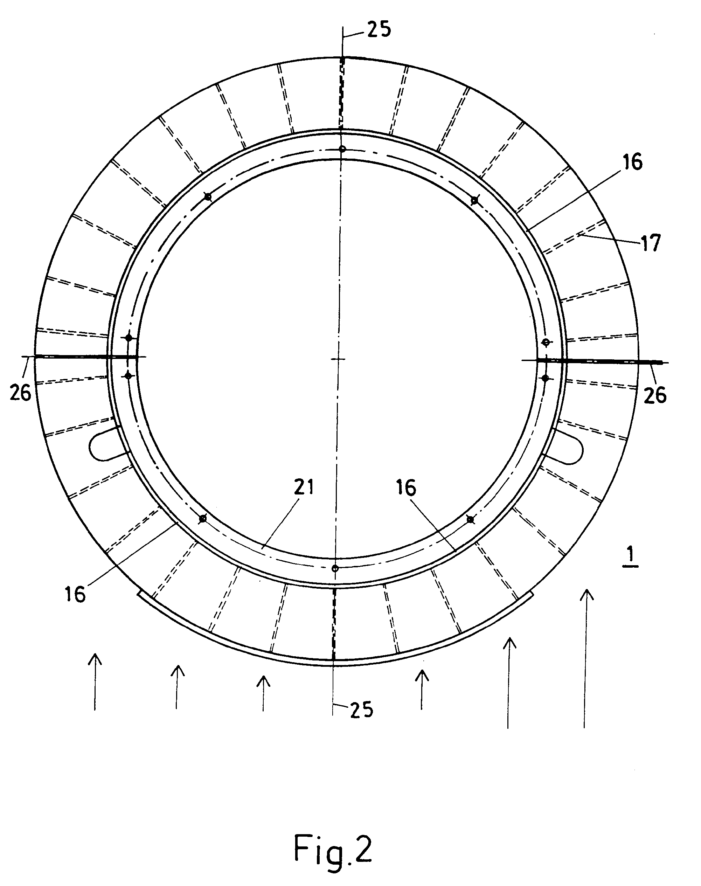

Wie ein Vergleich der Fig.1 mit dem Bild auf Seite 9 der eingangs zitierten Firmenschrift zeigt, ist zwischen dem Lager 8 und dem Axialventilator 9 axial und radial genügend Platz vorhanden, das vorgeschlagene Luftführungsorgan auch nachträglich in bestehende Maschinen einzubauen, wobei allenfalls Modifikationen der Wellendichtung 24 vonnöten sind. Sowohl für solche Fälle als auch für Neukonstruktionen ist es dabei vorteilhaft, das Luftführungsorgan 1 zweiteilig mit einer Trennung in der horizontalen Symmetrieebene 26 der Maschine auszubilden, wie es in Fig.2 verdeutlicht ist.

## Patentansprüche

1. Gasgekühlte elektrische Maschine mit einem Stator (3) und einem Rotor (6), auf dem ein Axialventilator (9) angeordnet ist, einem Wickelkopfraum (13), in den das vom Axialventilator geförderte Kühlgas einströmt und sich in mehrere Teilströme zur Kühlung des Stators und Rotors aufteilt, einem vom Wickelkopfraum (13) durch eine Wickelkopfverschalung (11) getrennten Ansaugraum (12), in den Frischgas von Kühlern (15) einströmt, und einer Aussenverschalung (14), welche den Ansaugraum (12) vom Aussenraum trennt, dadurch gekennzeichnet, dass in Strömungsrichtung des Kühlgases gesehen vor dem Axialventilator (9) und koaxial zu diesem ein ringförmiges Luftführungsorgan (1) vorgesehen ist, das an der Aussenverschalung (14) befestigt ist und das mit über seinen gesamten Umfang verteilten radial/axial verlaufenden Leitblechen (17) versehen ist, und dass auf einem Teil des Aussenumfangs des Luftführungsorgans (1) eine Abdeckung (23) vorgesehen ist, welche den Strömungsquerschnitt für das durch das Luftführungsorgan (1) hindurchströmende Kühlgas in Hauptrichtung der Zuströmung drosselt.

2. Maschine nach Anspruch 1, dadurch gekennzeichnet, dass das Luftführungsorgan (1) einen Innenring (16) mit radial nach aussen gerichteten Leitblechen (17), die im wesentlichen axial ausgerichtet sind, umfasst.

3. Maschine nach Anspruch 2, dadurch gekennzeichnet, dass an der Innenseite des Innenrings (16) ein Ringflansch (21) vorgesehen ist zur Befestigung des Luftführungsorgans an der Aussenverschalung (14).

4. Maschine nach einem der Ansprüch 1 bis 3, dadurch gekennzeichnet, dass die Leitbleche (17) eine axiale Länge aufweisen, die annähernd der axialen Weite des Ansaugraums (12) auf der Höhe des Axialventilators (9) entspricht.

5. Maschine nach Anspruch 4, dadurch gekennzeichnet, dass die axiale Länge der Abdeckung (23) annähernd der axialen Weite des Ansaugraums (12) auf der Höhe des Axialventilators (9) entspricht, wobei diese Abdeckung (23) an der dem Axialventilator (9) zugewandten Hinterkante der Leitbleche (17) beginnt.

6. Maschine nach einem der Ansprüch 1 bis 5, dadurch gekennzeichnet, dass die Abdeckung (23) sich symmetrisch zu vertikalen Symmetrieachse (25) der Maschine und über etwa ein Viertel des Umfangs des Luftführungsorgans (1) erstreckt.

## Claims

1. Gas-cooled electric machine having a stator and a rotor, on which an axial ventilator is arranged, an end-winding cavity into which the cooling gas conveyed by the axial ventilator flows and splits up into a plurality of component streams for cooling the stator and rotor, an inlet chamber which is separated from the end-winding cavity by an end-winding cover and into which fresh gas flows from coolers, and an outer cover which separates the inlet chamber from the outside, characterized in that, seen in the direction of flow of the cooling gas there is provided upstream of the axial ventilator and coaxially therewith an annular air guide member which is mounted on the outer cover and which is provided with baffles distributed over its entire circumference and extending radially/axially, and there is provided on a part of the outer circumference of the air guide member a covering which in the main direction of the approach flow restricts the flow cross section for the cooling gas flowing through the air guide member.

2. Machine according to Claim 1, characterized in that the air guide comprises an inner ring having baffles which are oriented radially outwards and aligned essentially axially.

3. Machine according to Claim 2, characterized in that a ring flange is provided on the inside of the inner ring for the purpose of mounting the air guide member on the outer cover.

4. Machine according to any of Claims 1 to 3, characterized in that the baffles have an axial length which corresponds approximately to the axial width of the inlet chamber at the level of the axial ventilator.

5. Machine according to Claim 4, characterized in that the axial length of the covering corresponds approximately to the axial width of the inlet chamber at the level of the axial ventilator, this covering beginning on the trailing edge of the baffles that face the axial ventilator.

6. Machine according to any of Claims 1 to 5, characterized in that the covering extends symmetrically with respect to the vertical axis of symmetry of the machine and over approximately a quarter of the circumference of the air guide member.

## Revendications

1. Machine électrique refroidie au gaz avec un stator (3) et un rotor (4), sur lequel est disposé un ventilateur axial (9), une chambre de tête de bobine (13) dans laquelle le gaz de refroidissement fourni par le ventilateur axial pénètre et se divise en plusieurs courants partiels pour le refroidissement du stator et du rotor, une chambre d'aspiration (12) séparée de la chambre de tête de bobine (13) par une enveloppe (11) de la tête de bobine, dans laquelle pénètre le gaz frais venant de refroidisseurs (15), et une enveloppe externe (14) qui isole la chambre d'aspiration (12) par rapport à l'extérieur, caractérisée en ce que, vu dans le sens de circulation du gaz de refroidissement, il est prévu avant le ventilateur axial (9) et coaxialement à celui-ci un organe annulaire de guidage de l'air (1), qui est fixé à l'enveloppe externe (14) et qui est pourvu de déflecteurs (17) à orientation radiale/axiale répartis sur sa périphérie, et en ce qu'il est prévu, sur une partie de la périphérie extérieure de l'organe de guidage de l'air (1) un recouvrement (23) qui étrangle la section d'écoulement dans le sens principal de l'écoulement pour le gaz de refroidissement circulant à travers l'organe de guidage de l'air (1).

2. Machine suivant la revendication 1, caractérisée en ce que l'organe de guidage de l'air (1) comprend une bague intérieure (16) avec des déflecteurs (17) orientés radialement vers l'extérieur, qui sont placés essentiellement en direction axiale.

3. Machine suivant la revendication 2, caractérisée en ce qu'il est prévu, à la face intérieure de la bague intérieure (16), une bride annulaire (21) pour la fixation de l'organe de guidage de l'air (1) à l'enveloppe externe (14).

4. Machine suivant l'une quelconque des revendications 1 à 3, caractérisée en ce que les déflecteurs (17) présentent une longueur axiale qui correspond approximativement à la largeur axiale de la chambre d'aspiration (12) sur la hauteur du ventilateur axial (9).

5. Machine suivant la revendication 4, caractérisée en ce que la longueur axiale du recouvrement (23) correspond approximativement à la largeur axiale de la chambre d'aspiration (12) sur la hauteur du ventilateur axial (9), ce recouvrement (23) commençant à l'arête arrière des déflecteurs (17) tournée vers le ventilateur axial (9).

6. Machine suivant l'une quelconque des revendications 1 à 5, caractérisée en ce que le recouvrement (23) s'étend symétriquement par rapport à l'axe de symétrie vertical (25) de la machine et sur environ un quart de la périphérie de l'organe de guidage de l'air (1).
